# EUROPÄISCHE PATENTSCHRIFT

(11) **EP 2 998 691 B1**
(45) Veröffentlichungstag und Bekanntmachung des Hinweises auf die Patenterteilung: **19.04.2017**
(21) Anmeldenummer: 15002581.5
(22) Anmeldetag: 02.09.2015
(51) Int. Cl.: G01M 13/04, G01B 5/28, G01B 5/00

(54) **KURBELLAGERFLANKEN-MESSVORRICHTUNG**
CRANK BEARING FLANKS MEASURING DEVICE
DISPOSITIF DE MESURE DE FLANCS DE PALIER DE VILEBREQUIN

(30) Priorität: 19.09.2014 DE 102014113553
(43) Veröffentlichungstag der Anmeldung: 23.03.2016
(73) Patentinhaber: JENOPTIK Industrial Metrology Germany GmbH, 78056 Villingen-Schwenningen (DE)
(72) Erfinder: Dietz, Guido, 85658 Egmating (DE)
(74) Vertreter: Wagner, Carsten

(56) Entgegenhaltungen:
- DE-A1-102009 042 252
- DE-U- 1 624 105
- US-A1- 2003 056 386

## Beschreibung

Die Erfindung betrifft eine Kurbellagerflanken-Messvorrichtung zur Vermessung der Flanken an Kurbellagern einer Kurbelwelle.

Im Rahmen der Herstellung von Kurbelwellen ist es erforderlich, sowohl Hauptlager der Kurbelwelle, die eine Hauptdrehachse der Kurbelwelle definieren, als auch Kurbellager an zu der Hauptdrehachse exzentrisch angeordneten Kurbelzapfen zu vermessen. Die Vermessung dient beispielsweise und insbesondere dazu, die Planlaufeigenschaften der Flanken sowohl der Hauptlager als auch der Kurbellager zu überprüfen.

Zur Durchführung der erforderlichen Messungen wird die Kurbelwelle zunächst so eingespannt, dass sie um ihre Hauptdrehachse gedreht wird, wobei mit Hilfe eines entsprechenden Messtasters während der Drehung der Kurbelwelle die Flanken der Hauptlager angetastet werden. Aus den dabei gewonnenen Messdaten kann dann überprüft werden, ob die Flanken der Hauptlager die erforderlichen Planlaufeigenschaften aufweisen.

Nach Abschluss der Vermessung der Flanken der Hauptlager wird die Kurbelwelle so umgespannt, dass die Drehachse, um die die Kurbelwelle bei der anschließenden Messung gedreht wird, durch die Rotationssymmetrieachse eines zu vermessenden Kurbellagers definiert ist. Nach dem Umspannen wird die Kurbelwelle um diese Drehachse gedreht, wobei mittels eines Tasters die Flanken des Kurbellagers angetastet werden. Da die Kurbelzapfen mit unterschiedlicher Exzentrizität zu der Hauptdrehachse angeordnet sind, wird dieser Vorgang so oft wiederholt, bis alle Kurbellager vermessen worden sind.

Hierbei ist nachteilig, dass der Umspannvorgang zeitaufwendig ist.

Durch 30 46 708 C2 ist ein manuell betätigbares Mantellinienprüfgerät bekannt, das insbesondere für Kurbelwellenzapfen geeignet ist. Das aus der Druckschrift bekannte Mantellinienprüfgerät ist auf einen zu prüfenden Kurbelzapfen aufsetzbar und mittels einer Spannvorrichtung auf denselben aufspannbar.

Durch DE 16 24 105 U ist ein manuell betätigbares Flankenmessgerät bekannt, mittels dessen der Flankenabstand an Lagerstellen, beispielsweise von Kurbelwellen, messbar ist.

Durch DE 10 2007 026 562 B4 ist ein Schleifzentrum zum Schleifen von Kurbelwellen bekannt, bei dem in einer ersten Station die Hauptlager und in einer zweiten Station paarweise jeweils zwei Hublager der Kurbelwelle geschliffen werden.

Durch DE 10 2010 035 147 A1 und DE 10 2009 042 252 B4 ist eine Messvorrichtung zur Inprozess-Messung am Prüfling während eines Bearbeitungsvorganges an einer Bearbeitungsmaschine, insbesondere einer Schleifmaschine bekannt, die einen Messkopf aufweist, der relativ zu einem Grundkörper der Messvorrichtung zwischen einer Ruheposition und einer Messposition, in der sich der Messkopf in Messkontakt mit dem Prüfling befindet, beweglich ist. Der Messkopf ist mit dem Grundkörper über ein Gestänge verbunden und folgt bei der Vermessung eines Kurbelzapfens einer Kurbelwelle dessen Orbitaldrehungen um eine durch die Hauptdrehachse der Kurbelwelle definierte Hauptdrehachse.

Eine ähnliche Messvorrichtung ist auch durch US 2003 / 0 056 386 A1 bekannt.

Der Erfindung liegt die Aufgabe zugrunde, eine Kurbellagerflanken-Messvorrichtung zur Vermessung der Flanken von Kurbellagern einer Kurbelwelle anzugeben, die den bei der Vermessung von Kurbellagern einer Kurbelwelle erforderlichen Zeitaufwand verringert.

Diese Aufgabe wird durch die im Anspruch 1 gegebene Erfindung gelöst.

Der Grundgedanke der Erfindung besteht darin, die Kurbellager-Messvorrichtung, die nachfolgend auch kurz als Messvorrichtung bezeichnet wird, so auszugestalten, dass die Vermessung der Kurbellagerflanken erfolgt, während die Kurbelwelle um die Hauptdrehachse gedreht wird. Mit anderen Worten besteht also der Grundgedanke der Erfindung darin, die Messvorrichtung so auszugestalten, dass ein Umspannen der Kurbelwelle nach der Vermessung der Hauptlager und vor der Vermessung der Kurbellager nicht erforderlich ist.

Hierzu sieht die Erfindung einen Messkopf vor, der ein Tasterprisma zur Anlage an einem Kurbelzapfen der Kurbelwelle und wenigstens einen Messtaster zur Anlage an einer zur vermessenden Flanke des Kurbellagers aufweist. Erfindungsgemäß ist ferner der Messkopf derart ausgebildet und mit dem Grundkörper verbunden, dass der Messkopf bei einer Drehung der Kurbelwelle um die Hauptdrehachse Orbitaldrehungen des Kurbelzapfens folgt.

Da also erfindungsgemäß der Messkopf Orbitaldrehungen des Kurbelzapfens folgt, können die Kurbellagerflanken vermessen werden, während die Kurbelwelle um die durch ihre Hauptlager definierte Hauptdrehachse gedreht wird. Damit kann eine Vermessung der Hauptlager und der Kurbellager in derselben Einspannposition der Kurbelwelle erfolgen, so dass ein Umspannen entfällt. Auf diese Weise ist die Vermessung der Flanken von Lagern einer Kurbelwelle besonders zeitsparend gestaltet. Dies wirkt sich, insbesondere im Rahmen einer Serienfertigung, kostensenkend aus.

Insbesondere besteht unter Verwendung der erfindungsgemäßen Vorrichtung auch die Möglichkeit, bei Verwendung von wenigstens zwei Messköpfen gleichzeitig wenigstens ein Hauptlager sowie wenigstens ein Kurbellager der Kurbelwelle zu vermessen, was den Messvorgang noch zeitsparender gestaltet. Prinzipiell besteht auch die Möglichkeit, sämtliche Lager der Kurbelwelle gleichzeitig zu vermessen, wenn eine der Anzahl der Lager entsprechende Anzahl von Messköpfen vorgesehen ist.

Zweckmäßigerweise verläuft die Tastrichtung des Messtasters parallel oder annähernd parallel zur Hauptdrehachse. Unter der Tastrichtung wird erfindungsgemäß diejenige Richtung verstanden, in der der Messtaster die Flanke des zu vermessenden Kurbellagers antastet. Unter einer zur Hauptdrehachse annähernd parallelen Antastung wird erfindungsgemäß verstanden, dass die Antastung im Rahmen der Messgenauigkeit als zur Hauptdrehachse parallel anzusehen ist.

Die Verbindung des Messkörpers mit dem Grundkörper kann auf beliebige geeignete Weise erfolgen, solange sichergestellt ist, dass der Messkopf in der Lage ist, Orbitaldrehungen des Kurbelzapfens zu folgen. Um unter dieser Prämisse die Verbindung des Messkopfes mit dem Grundkörper besonders einfach und robust zu gestalten, sieht eine vorteilhafte Weiterbildung der Erfindung vor, dass der Messkopf mit dem Grundkörper über ein Gestänge verbunden ist.

Bei der vorgenannten Ausführungsform kann das Gestänge entsprechend den jeweiligen Anforderungen in beliebiger geeigneter Weise ausgestaltet sein. Eine vorteilhafte Weiterbildung sieht insoweit vor, dass das Gestänge ein erstes Gestängeelement aufweist, das um zu der Hauptdrehachse parallele Drehachsen einerseits mit dem Grundkörper und andererseits mit einem Ende eines zweiten Gestängeelementes verbunden ist, dessen anderes Ende um eine zu der Hauptdrehachse parallele Drehachse mit dem Messkopf oder einem damit verbundenen Bauteil verbunden ist. Diese Ausführungsform stellt mit einer minimalen Anzahl von Bauteilen ein einfach und damit kostengünstig und robust aufgebautes Gestänge bereit, das eine Verbindung des Messkopfes mit dem Grundkörper realisiert, bei der der Messkopf Orbitaldrehungen des Kurbelzapfens bei einer Drehung der Kurbelwelle um die Hauptdrehachse folgen kann. Eine minimale Anzahl von Gestängeelementen ist auch insofern vorteilhaft, als damit auch die Anzahl der Gelenke einerseits zwischen den Gestängeelementen und andererseits zwischen den Gestängeelementen untereinander und dem Messkopf bzw. dem Grundkörper minimiert ist, so dass Auswirkungen von Spiel oder Fertigungstoleranzen in bzw. an den Gelenken auf das Messergebnis minimiert sind.

Eine vorteilhafte Weiterbildung der vorgenannten Ausführungsform sieht vor, dass das Tasterprisma drehfest mit einem Haltearm verbunden ist, der mit dem zweiten Gestängeelement um eine zu der Hauptdrehachse parallele Drehachse drehbar verbunden ist.

Erfindungsgemäß ist es grundsätzlich ausreichend, wenn der Messkopf einen einzelnen Messtaster aufweist. Eine außerordentlich vorteilhafte Weiterbildung der Erfindung sieht vor, dass der Messkopf zwei in entgegengesetzte Tastrichtungen tastende Messtaster aufweist zur gleichzeitigen Antastung einander gegenüberliegender Flanken eines Kurbellagers. Bei dieser Ausführungsform werden die beiden gegenüberliegenden Flanken eines Kurbellagers mittels der zwei Messtaster gleichzeitig angetastet und vermessen, so dass der Zeitaufwand zur Vermessung der Kurbellager einer Kurbelwelle weiter verringert ist.

Erfindungsgemäß ist es grundsätzlich möglich, Vorspannmittel zur Vorspannung des Messkopfes gegen den zu vermessenden Kurbelzapfen vorzusehen, wobei die Vorspannmittel beispielsweise Federmittel aufweisen können. Um die Anzahl der Bauteile der erfindungsgemäßen Messvorrichtung weiter zu verringern, sieht eine vorteilhafte Weiterbildung der Erfindung vor, dass das Gestänge und der Messkopf derart ausgebildet und eingerichtet sind, dass das Tasterprisma während Orbitaldrehungen des Messkopfes durch Schwerkraft in Eingriff mit dem Kurbelzapfen gehalten wird. Auf diese Weise sind separate Vorspannmittel grundsätzlich nicht mehr erforderlich.

Erfindungsgemäß ist es grundsätzlich möglich, dass der Messkopf vor Beginn einer Messung durch einen Bediener von Hand in Eingriff mit dem Kurbellager gebracht wird, indem das Tasterprisma auf den Kurbelzapfen aufgesetzt wird. Eine vorteilhafte Weiterbildung sieht insoweit Antriebsmittel zum Ineingriffbringen des Messkopfes mit dem Kurbelzapfen vor. Die Antriebsmittel können beispielsweise und insbesondere einen elektromotorischen Antrieb, einen hydraulischen Antrieb oder einen pneumatischen Antrieb aufweisen und entsprechend den jeweiligen Anforderungen ausgestaltet sein. Die Antriebsmittel können nicht nur dazu dienen, den Messkopf vor Beginn der Messung in Eingriff mit dem Kurbelzapfen zu bringen. Sie können auch dazu dienen, den Messkopf nach Abschluss einer Messung außer Eingriff von dem Kurbelzapfen zu bringen.

Eine vorteilhafte Weiterbildung der vorgenannten Ausführungsform sieht eine Steuerungseinrichtung zur Ansteuerung der Antriebsmittel derart vor, dass die Antriebsmittel teil- oder vollautomatisch arbeiten. Insbesondere ist bei einer solchen Ausührungsform ein vollautomatischer Betrieb möglich, bei dem die Antriebsmittel den Messtaster vor Beginn einer Messung automatisch in Eingriff mit dem Kurbelzapfen und nach Abschluss einer Messung automatisch außer Eingriff von dem Kurbelzapfen bringen. Ein vollautomatischer Betrieb kann beispielsweise dadurch realisiert werden, dass eine Messsteuerung ein "Start-Signal" an die Steuerungseinrichtung der Antriebsmittel übermittelt, die die Antriebsmittel daraufhin so ansteuert, dass der Messkopf in Eingriff mit dem Kurbelzapfen gebracht wird. Nach Durchführung der Messung kann die Messsteuerung dann ein "Stop-Signal" an die Steuerungseinrichtung übermitteln, die die Antriebsmittel daraufhin derart ansteuert, dass der Messkopf außer Eingriff von dem Kurbelzapfen gebracht wird.

Um die während einer Orbitaldrehung des Kurbelzapfens durch den Messtaster aufgenommenen Messwerte den Umfangsstellen der Kurbellagerflanke zuzuordnen, kann den Mitteln zum Drehen der Kurbelwelle um die Hauptdrehachse ein Drehgeber zugeordnet sein. Da bei bekannter Geometrie der Kurbelwelle eindeutig zuzuordnen ist, welcher Drehlage der Kurbelwelle um die Hauptdrehachse eine bestimmte Drehlage des Messprismas relativ zu dem Kurbelzapfen entspricht, kann unter Heranziehung der Ausgangssignale des Drehgebers und der bekannten Geometrie der Kurbelwelle ohne weiteres ermittelt werden, welcher aufgenommene Messwert einer bestimmten Umfangsstelle der Kurbellagerflanke entspricht.

Die von dem Messtaster ermittelten Messwerte können in einem Speicher abgespeichert und in einer dem Speicher nachgeordneten Auswertungseinrichtung ausgewertet werden. Der Aufbau und die Funktion einer entsprechenden Auswertungseinrichtung, die für ein Zusammenwirken mit einem Messtaster vorgesehen ist, sind dem Fachmann allgemein bekannt und werden daher nicht näher erläutert.

Die Erfindung wird nachfolgend anhand der beigefügten Zeichnung näher erläutert, in der stark schematisiert ein Ausführungsbeispiel einer erfindungsgemäßen Messvorrichtung dargestellt ist.

Es zeigt:
- FIG. 1: eine Radialansicht einer Kurbelwelle,
- FIG. 2: einen Schnitt entlang einer Linie A-A in FIG. 1 zur Verdeutlichung der exzentrischen Anordnung der Kurbellager relativ zu den Hauptlagern der Kurbelwelle gemäß FIG. 1,
- FIG. 3: in vergrößertem Maßstab eine Einzelheit im Bereich eines Kurbellagers zur Verdeutlichung der Geometrie der Kurbellagerflanken,
- FIG. 4: stark schematisiert ein Ausführungsbeispiel einer erfindungsgemäßen Vorrichtung während eines Messvorganges und
- FIG. 5: ein Detail der Messvorrichtung gemäß FIG. 4 im Bereich der Messtaster.

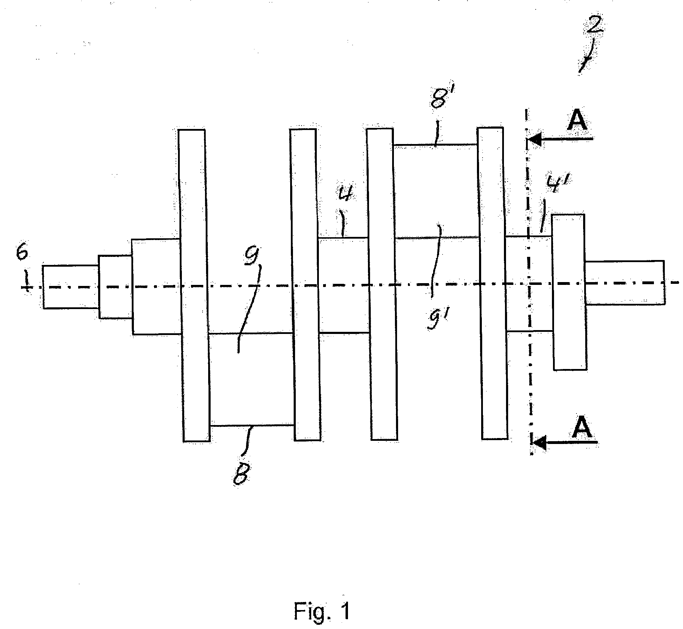

In FIG. 1 ist eine Kurbelwelle 2 dargestellt, die Hauptlager 4, 4' aufweist, die eine Hauptdrehachse 6 definieren. Die Kurbelwelle 2 weist ferner Kurbellager 8, 8' auf, die zu der Hauptdrehachse 6 exzentrisch ausgebildet sind und somit bei einer Drehung der Kurbelwelle 2 um die Hauptdrehachse 6 eine Orbitaldrehung ausführen. Die Kurbellager 8, 8' sind an zylindrischen Kurbelzapfen 9, 9' ausgebildet. Im Übrigen ist der grundsätzliche Aufbau einer Kurbelwelle dem Fachmann allgemein bekannt und wird daher hier nicht näher erläutert.

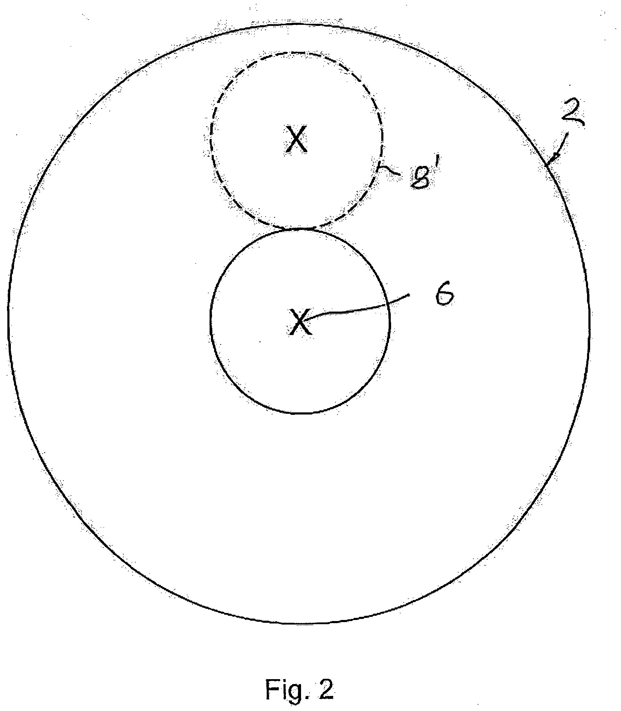

Aus FIG. 2, die einen Schnitt entlang einer Linie A-A in FIG. 1 zeigt, ist ersichtlich, dass das Kurbellager 8' exzentrisch zu dem Hauptlager 4 und der Hauptdrehachse 6 angeordnet ist. Das Gleiche gilt für das Kurbellager 8.

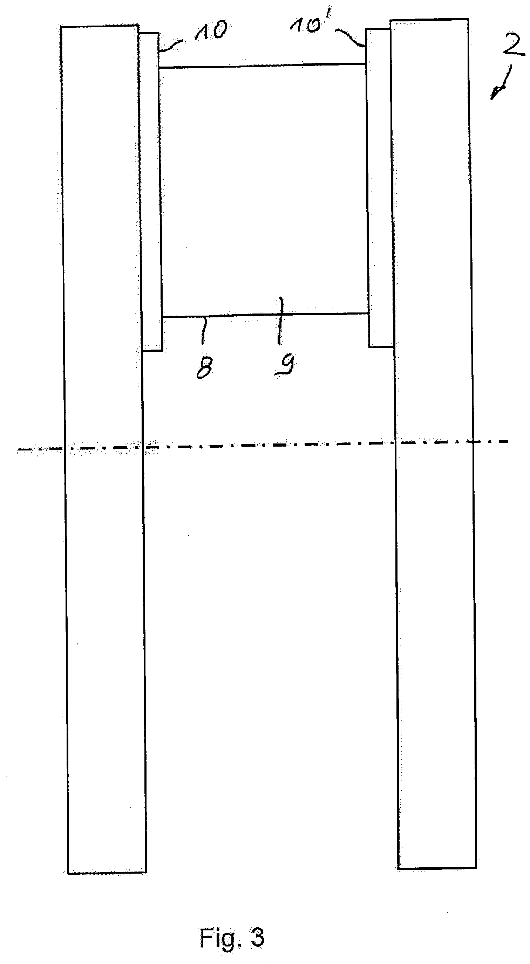

FIG. 3 zeigt in vergrößertem Maßstab eine Einzelheit aus FIG. 1 im Bereich des Kurbellagers 8, wobei die Geometrie des Kurbellagers 8 näher dargestellt ist. Das Kurbellager 8 weist gegenüberliegende, in Umfangsrichtung des Kurbellagers 8 verlaufende Kurbellagerflanken 10, 10' auf, die bei Verwendung der Kurbelwelle 2 Gleitlagerflächen bilden. Dementsprechend ist es im Rahmen der Fertigung der Kurbelwelle 2 erforderlich, die Kurbellagerflanken 10, 10' zu prüfen, insbesondere im Hinblick auf ihre Planlaufeigenschaften. Die entsprechende Planlaufmessung an Kurbellagerzapfen einer Kurbelwelle ist für sich genommen dem Fachmann ebenfalls allgemein bekannt und wird daher hier nicht näher erläutert.

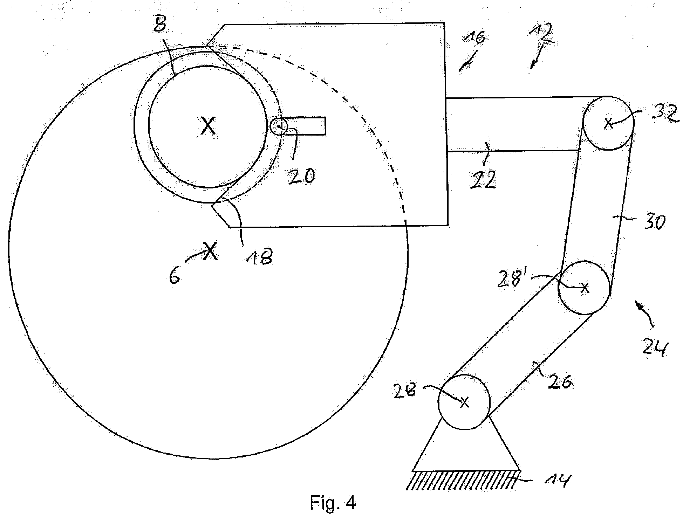

In FIG. 4 ist stark schematisiert ein Ausführungsbeispiel einer erfindungsgemäßen Kurbellagerflanken-Messvorrichtung 12 dargestellt, die nachfolgend auch kurz als Messvorrichtung 12 bezeichnet wird und einen Grundkörper 14 aufweist. Die Messvorrichtung 12 dient zur Vermessung der Flanken 10, 10' der Kurbellager 8, 8', insbesondere im Hinblick auf deren Planlaufeigenschaften.

Die Messvorrichtung 12 weist Mittel zum Drehen der Kurbelwelle 2 um die durch ihre Hauptlager 4, 4' definierte Hauptdrehachse 6 auf, die einen durch eine Steuerungseinrichtung der Messvorrichtung 12 ansteuerbaren Drehantrieb aufweist, mittels dessen die mit Hilfe einer geeigneten Spannvorrichtung (nicht dargestellt) eingespannte Kurbelwelle 2 um die Hauptdrehachse 6 gedreht wird. Aufbau und Funktion eines entsprechenden Drehantriebs sowie einer zugehörigen Steuerungseinrichtung sind dem Fachmann allgemein bekannt, so dass diese Bauteile weder in der Zeichnung dargestellt sind noch nachfolgend näher erläutert werden.

Die erfindungsgemäße Messvorrichtung 12 weist ferner einen Messkopf 16 auf, der ein Tasterprisma 18 zur Anlage an dem zur vermessenden Kurbellager 8 aufweist.

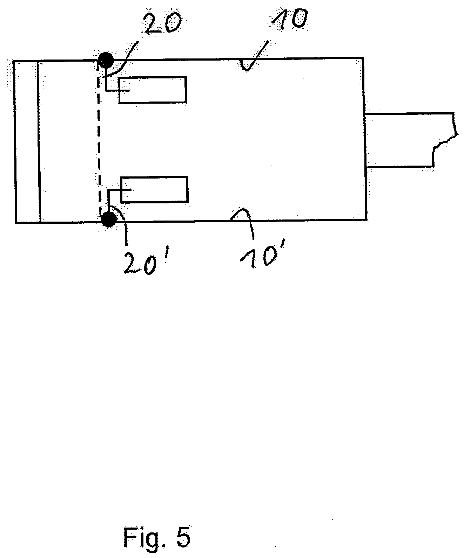

Der Messkopf 16 weist ferner einen Messtaster 20 (vgl. FIG. 5) auf, der die Kurbellagerflanke 10 in einer Tastrichtung antastet. Wie aus einem Vergleich der FIG. 4 und 5 ersichtlich ist, tastet der Messtaster 20 die Kurbellagerflanke 10, die nachfolgend auch kurz als Flanke bezeichnet wird, senkrecht zu deren Oberfläche an, so dass die Tastrichtung des Messtasters 20 im Wesentlichen parallel zu der Hauptdrehachse 6 verläuft. Wie aus FIG. 5 ersichtlich, weist bei dem dargestellten Ausführungsbeispiel der Messkopf 16 einen weiteren Messtaster 20' auf, der zur Antastung der der Flanke 10 gegenüberliegenden Flanke 10' dient. Dadurch, dass der Messkopf 16 zwei in entgegengesetzten Tastrichtungen antastende Messtaster 20, 20' aufweist, können bei einem Messvorgang beide Flanken 10, 10' gleichzeitig angetastet und vermessen werden.

Erfindungsgemäß ist der Messkopf 16 derart ausgebildet und mit dem Grundkörper 14 verbunden, dass der Messkopf 16 bei einer Drehung der Kurbelwelle 2 um die Hauptdrehachse 6 Orbitaldrehungen des Kurbelzapfens 9, der das Kurbellager 8 definiert, folgt.

Bei dem dargestellten Ausführungsbeispiel ist das Tasterprisma 18 drehfest mit einem Haltearm 22 verbunden, der über ein Gestänge 24 mit dem Grundkörper 14 der Messvorrichtung 2 verbunden ist. Das Gestänge 24 weist ein erstes Gestängeelement 26 auf, das um zu der Hauptdrehachse 6 parallele Drehachsen 28, 28' einerseits mit dem Grundkörper 14 und andererseits mit einem Ende eines zweiten Gestängeelementes 30 verbunden ist, dessen anderes Ende um eine zu der Hauptdrehachse 6 parallele Drehachse 32 mit dem Haltearm 22 verbunden ist. Durch das Gestänge 24 ist mit einer minimalen Anzahl von Bauteilen eine Anordnung gebildet, die es dem Messkopf 16 ermöglicht, bei einer Drehung der Kurbelwelle 2 um die Hauptdrehachse 6 Orbitaldrehungen des Kurbelzapfens 8 zu folgen. Das Tasterprisma 18 kann entsprechend den jeweiligen Gegebenheiten durch Schwerkraft in Eingriff mit dem Kurbelzapfen 8 gehalten sein, während dieser Orbitaldrehungen ausführt. Es ist erfindungsgemäß jedoch auch möglich, das Tasterprisma 18 ggf. zusätzlich durch Vorspannmittel in Eingriff mit dem Kurbelzapfen 8 zu halten.

Die Funktionsweise der erfindungsgemäßen Messvorrichtung 12 ist wie folgt:
Vor Beginn einer Messung wird der Messkopf 16 durch einen geeigneten Antrieb (nicht dargestellt) in Eingriff mit dem Kurbelzapfen 8 gebracht, indem das Tasterprisma 18 auf die äußere Umfangsfläche des Kurbelzapfens 9 aufgesetzt wird. Hierbei gelangen die Messtaster 20, 20' an den Flanken 10, 10' des Kurbellagers 8 zur Anlage. Bei einer Drehung der Kurbelwelle 2 um die Hauptdrehachse 6 führt der Kurbelzapfen 9 eine Orbitaldrehung aus, wobei die Flanken 10, 10' sich relativ zu den Messtastern 20, 20' drehen und die Messtaster 20, 20' damit zeitlich aufeinanderfolgend unterschiedliche Umfangsstellen der Flanken 10, 10' antasten. Die hierbei von den Messtastern 20, 20' aufgenommenen Messwerte werden in einem Speicher gespeichert und zu einer Auswertungseinrichtung übermittelt.

Um die so ermittelten Messwerte den jeweiligen Umfangsstellen der Flanken 10, 10' zuordnen zu können, ist dem Drehantrieb zum Drehen der Kurbelwelle 2 um die Hauptdrehachse 6 ein Drehgeber zugeordnet. Aus den Ausgangssignalen des Drehgebers und der bekannten Geometrie der Kurbelwelle 2 bzw. der Geometrie des Gestänges 24 kann in der Auswertungseinrichtung ermittelt werden, zu welchen Umfangsstellen der Flanken 10, 10' die aufgenommenen Messwerte gehören. Auf diese Weise kann in der Auswertungseinrichtung ermittelt werden, ob die Flanken 10, 10' die gewünschten Planlaufeigenschaften aufweisen.

Da mittels der erfindungsgemäßen Messvorrichtung 12 die Flanken 10, 10' vermessen werden können, während sich die Kurbelwelle 2 um die Hauptdrehachse 6 dreht, können die Hauptlager 4, 4' und die Kurbellager 8, 8' der Kurbelwelle 2 in der gleichen Einspannposition der Kurbelwelle 2 vermessen werden, so dass ein Umspannen der Kurbelwelle 2 entfällt. Auf diese Weise ist die Vermessung der Hauptlager 4, 4' und der Kurbellager 8, 8' besonders zeitsparend und einfach gestaltet.

## Patentansprüche

1. Kurbellagerflanken-Messvorrichtung (12) zur Vermessung der Flanken (10, 10') an Kurbellagern (8) einer Kurbelwelle (2)
mit einem Grundkörper (14),
mit Mitteln zum Drehen der Kurbelwelle (2) um eine durch ihre Hauptlager definierte Hauptdrehachse (6),
mit einem Messkopf (16), der ein Tasterprisma (18) zur Anlage an einem Kurbelzapfen (9) des Kurbellagers (8) und wenigstens einen Messtaster (20, 20') zur Anlage an einer zu vermessenden Flanke (10, 10') des Kurbellagers (8) aufweist,
wobei der Messkopf (16) derart ausgebildet und mit dem Grundkörper (14) verbunden ist, dass der Messkopf (16) bei einer Drehung der Kurbelwelle (2) um die Hauptdrehachse (6) Orbitaldrehungen des Kurbelzapfens (9) folgt.

2. Messvorrichtung nach Anspruch 1, **dadurch gekennzeichnet, dass** die Tastrichtung des Messtasters (20, 20') parallel oder annähernd parallel zu der Hauptdrehachse (6) ist.

3. Messvorrichtung nach Anspruch 1 oder 2, **dadurch gekennzeichnet, dass** der Messkopf (16) mit dem Grundkörper (14) über ein Gestänge (24) verbunden ist.

4. Messvorrichtung nach Anspruch 3, **dadurch gekennzeichnet, dass** das Gestänge (24) ein erstes Gestängeelement (26) aufweist, das um zu der Hauptdrehachse parallele Drehachsen (28, 28') einerseits mit dem Grundkörper (14) und andererseits mit einem Ende eines zweiten Gestängeelementes (30) verbunden ist, dessen anderes Ende um eine zu der Hauptdrehachse (6) parallele Drehachse (32) mit dem Messkopf (16) oder einem damit verbundenen Bauteil verbunden ist.

5. Messvorrichtung nach Anspruch 4, **dadurch gekennzeichnet, dass** das Tasterprisma (18) drehfest mit einem Haltearm (22) verbunden ist, der drehbar mit dem zweiten Gestängeelement (30) verbunden ist.

6. Messvorrichtung nach einem der vorhergehenden Ansprüche, **dadurch gekennzeichnet, dass** der Messkopf (16) zwei in entgegengesetzte Tastrichtungen tastende Messtaster (20, 20') aufweist zur gleichzeitigen Antastung einander gegenüberliegender Flanken (10, 10') eines Kurbellagers (8).

7. Messvorrichtung nach einem der Ansprüche 3 bis 5, **dadurch gekennzeichnet, dass** das Gestänge (24) und der Messkopf (16) derart ausgebildet und eingerichtet sind, dass das Tasterprisma (18) während Orbitaldrehungen des Messkopfes (16) durch Schwerkraft in Eingriff mit dem Kurbelzapfen (9) gehalten wird.

8. Messvorrichtung nach einem der vorhergehenden Ansprüche, **gekennzeichnet durch** Antriebsmittel zum Ineingriff- bringen des Messkopfes (16) mit dem Kurbelzapfen (9).

9. Messvorrichtung nach Anspruch 8, **gekennzeichnet durch** eine Steuerungseinrichtung zur Ansteuerung der Antriebsmittel zum Ineingriffbringen des Messkopfes (16) mit dem Kurbelzapfen (9) derart, dass diese Mittel teil- oder vollautomatisch arbeiten.

## Claims

1. Crank bearing face measuring device (12) for measuring the faces (10, 10') on crank bearings (8) of a crankshaft (2) comprising
a base body (14),
a device for rotating the crankshaft (2) about a main axis of rotation (6) defined by its main bearing,
a measuring head (16) comprising a probe prism (18) for placing against a crank pin (9) of the crank bearing (8), and having at least one measuring probe (20, 20') for placing against a face (10, 10') of the crank bearing (8) to be measured,
wherein the measuring head (16) is designed and connected to the base body (14) in such a way that the measuring head (16) follows orbital rotations of the crank pin (9) during the rotation of the crankshaft (2) about the main axis of rotation (6).

2. Measuring device according to claim 1, **characterised in that** the scanning direction of the measuring probe (20, 20') is parallel or approximately parallel to the main axis of rotation (6).

3. Measuring device according to claim 1 or 2, **characterised in that** the measuring head (16) is joined to the base body (14) by a rod assembly (24).

4. Measuring device according to claim 3, **characterised in that** the rod assembly (24) has a first rod assembly element (26) which on the one had is connected to the base body (14) about rotational axes (28, 28') that are parallel to the main axis of rotation, and on the other hand is connected to one end of a second rod assembly element (30), whose other end is connected to the measuring head (16) or to a component that is connected thereto about a rotational axis (32) that is parallel to the main axis of rotation (6).

5. Measuring device according to claim 4, **characterised in that** the probe prism (18) is connected in a rotationally fixed manner to a holding arm (22) which is rotatably connected to the second rod assembly element (30).

6. Measuring device according to any one of the preceding claims, **characterised in that** the measuring head (16) comprises two measuring probes (20, 20') scanning in opposite scanning directions for the simultaneous scanning of opposite faces (10, 10') of a crank bearing (8).

7. Measuring device according to any one of claims 3 to 5, **characterised in that** the rod assembly (24) and the measuring head (16) are configured in such a way and set up so that the probe prism (18) is held in contact with the crank pin (9) by gravitational force during orbital rotations of the measuring head (16).

8. Measuring device according to any one of the preceding claims, **characterised by** drive means for bringing the measuring head (16) into contact with the crank pin (9).

9. Measuring device according to claim 8, **characterised by** a control device for controlling the drive means for bringing the measuring head (16) into contact with the crank pin (9) in such a way that said means operates partly automatically or fully automatically.

## Revendications

1. Dispositif de mesure de flancs de palier de vilebrequin (12) pour la mesure des flancs (10, 10') sur des paliers de vilebrequin (8) d'un vilebrequin (2)
avec un corps de base (14),
avec des moyens pour faire tourner le vilebrequin (2) autour d'un axe de rotation principal (6) défini par ses paliers principaux,
avec une tête de mesure (16) qui présente un prisme de palpeur (18) destiné à venir s'appuyer sur un tourillon de vilebrequin (9) du palier de vilebrequin (8), et au moins un palpeur de mesure (20, 20') destiné à venir s'appuyer sur un flanc (10, 10') à mesurer du palier de vilebrequin (8),
la tête de mesure (16) étant constituée et raccordée au corps de base (14) de telle sorte que, lors d'une rotation du vilebrequin (2) autour de l'axe de rotation principal (6), la tête de mesure (16) suit des rotations orbitales du tourillon de vilebrequin (9).

2. Dispositif de mesure selon la revendication 1, **caractérisé en ce que** la direction de palpage du palpeur de mesure (20, 20') est parallèle ou approximativement parallèle à l'axe de rotation principal (6).

3. Dispositif de mesure selon la revendication 1 ou 2, **caractérisé en ce que** la tête de mesure (16) est raccordée au corps de base (14) par le biais d'une tige (24)

4. Dispositif de mesure selon la revendication 3, **caractérisé en ce que** la tige (24) présente un premier élément de tige (26) qui est raccordé, autour d'axes de rotation (28, 28') parallèles à l'axe de rotation principal, d'une part au corps de base (14) et d'autre part à une extrémité d'un deuxième élément de tige (30) dont l'autre extrémité est raccordée, autour d'un axe de rotation (32) parallèle à l'axe de rotation principal (6), à la tête de mesure (16) ou à un composant qui y est raccordé.

5. Dispositif de mesure selon la revendication 4, **caractérisé en ce que** le prisme de palpeur (18) est raccordé, de façon solidaire en rotation, à un bras de retenue (22) qui est raccordé en rotation au deuxième élément de tige (30).

6. Dispositif de mesure selon l'une des revendications précédentes, **caractérisé en ce que** la tête de mesure (16) présente deux palpeurs de mesure (20, 20') palpant dans des directions de palpage opposées pour le palpage simultané de flancs (10, 10') d'un palier de vilebrequin (8) disposés l'un en face de l'autre.

7. Dispositif de mesure selon l'une des revendications 3 à 5, **caractérisé en ce que** la tige (24) et la tête de mesure (16) sont constituées et agencées de telle sorte que, pendant des rotations orbitales de la tête de mesure (16), le prisme de palpeur (18) est maintenu par la force de gravité en prise avec le tourillon de vilebrequin (9).

8. Dispositif de mesure selon l'une des revendications précédentes, **caractérisé par** des moyens d'entraînement pour la mise en prise de la tête de mesure (16) avec le tourillon de vilebrequin (9).

9. Dispositif de mesure selon la revendication 8, **caractérisé par** un système de commande pour le pilotage des moyens destinés à la mise en prise de la tête de mesure (16) avec le tourillon de vilebrequin (9) de telle sorte que ces moyens fonctionnent de façon partiellement ou entièrement automatique.
